(19) Europäisches Patentamt / European Patent Office / Office européen des brevets

(11) **EP 3 271 614 B1**

(12) **EUROPÄISCHE PATENTSCHRIFT**

(45) Veröffentlichungstag und Bekanntmachung des Hinweises auf die Patenterteilung:
**24.04.2019 Patentblatt 2019/17**

(21) Anmeldenummer: **16728329.0**

(22) Anmeldetag: **10.06.2016**

(51) Int Cl.:
*F16H 49/00* *(2006.01)*   *B62D 5/00* *(2006.01)*

(86) Internationale Anmeldenummer:
**PCT/EP2016/063401**

(87) Internationale Veröffentlichungsnummer:
**WO 2016/198673 (15.12.2016 Gazette 2016/50)**

(54) **RADIAL BAURAUMSPARENDES SPANNUNGSWELLENGETRIEBE**

STRAIN WAVE GEAR REQUIRING REDUCED RADIAL INSTALLATION SPACE

ENGRENAGE À ONDE DE DÉFORMATION À FAIBLE ENCOMBREMENT RADIAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2015 DE 102015109426**
**19.06.2015 LU 92750**

(43) Veröffentlichungstag der Anmeldung:
**24.01.2018 Patentblatt 2018/04**

(73) Patentinhaber: **Ovalo GmbH**
**65555 Limburg (DE)**

(72) Erfinder:
• **GILGES, Siegmar**
**65307 Bad Schwalbach (DE)**
• **GLAD, Matthias**
**65326 Aarbergen-Michelbach (DE)**

(74) Vertreter: **Grabovac, Dalibor et al**
**GH-Patent**
**Patentanwaltskanzlei**
**Bahnhofstraße 2**
**65307 Bad Schwalbach (DE)**

(56) Entgegenhaltungen:
**EP-A1- 0 640 778      EP-A2- 2 003 368**
**WO-A1-2008/068207      DE-A1-102007 000 945**
**DE-A1-102007 051 418      DE-A1-102010 037 226**
**DE-A1-102011 053 323      DE-A1-102011 109 170**
**DE-T5-112011 104 783      US-A- 2 943 508**

• **A J Bamnote ET AL: "Meshing Analysis Of Teeth Of Harmonic Drives: A Computer Based Approach", , 18. Dezember 2003 (2003-12-18), XP055166881, New Delhi Gefunden im Internet: URL:http://www.nacomm03.ammindia.org/Articles/Ana011.pdf [gefunden am 2015-02-03]**

**Beschreibung**

Die Erfindung betrifft ein Spannungswellengetriebe, das einen Außenring mit einer Innenverzahnung aufweist, in den an zwei gegenüberliegenden Stellen ein flexibler Innenring mit einer Außenverzahnung eingreift.

Die Erfindung betrifft außerdem einen Aktuator, der insbesondere als Überlagerungssteller für eine Fahrzeuglenkung oder ein aktives Fahrwerk ausgebildet sein kann und der ein Spannungswellengetriebe der eingangs genannten Art aufweist.

Die Erfindung betrifft insbesondere auch eine Fahrzeuglenkung und ein aktives Fahrwerk, sowie ein Kraftfahrzeug.

Die Erfindung betrifft außerdem ein motorisiertes Gelenk zum Verbinden von zwei relativ zueinander beweglichen Trägern eines programmierbaren Bewegungsautomaten sowie einen programmierbaren Bewegungsautomaten.

Spannungswellengetriebe werden wegen ihrer Vorteile, wie ihrer per se vorhandenen Spielfreiheit, beispielsweise gerne in Fahrzeuglenkungen als Überlagerungssteller eingesetzt. Auch beispielsweise in Flugsimulatoren oder in Werkzeugmaschinen werden Spannungswellengetriebe eingesetzt.

Eine Überlagerungslenkung hat den Vorteil, dass den Lenkbewegungen, die der Fahrer durch Drehen des Lenkrades vorgibt, fahrsituationsabhängig eine zusätzliche Lenkbewegung überlagert werden kann. Beispielsweise kann eine Überlagerungslenkung derart konzipiert sein, dass bei langsamer Fahrt, wie beim Rangieren oder Einparken, ein großer Radwinkel mit kleineren Lenkradumdrehungswinkeln erzielbar ist, während die Überlagerungslenkung bei schneller Fahrt, beispielsweise auf der Autobahn, umgekehrt wirkt.

Aus DE 10 2007 051 418 A1 ist ein Getriebe für ein Fahrzeuglenksystem bekannt. Das Getriebe dient dazu, den von einem Fahrer ausgeübten Lenkbewegungen zusätzliche Lenkbewegungen zu überlagern. Das Getriebe weist eine Eingangswelle auf, die mit einem Flexspline drehfest verbunden ist. Darüber hinaus weist das Getriebe eine Ausgangswelle auf, die drehfest mit einem Circularspline verbunden ist. Der Flexspline ist mit einer Außenverzahnung versehen, die mit einer Innenverzahnung des Circularsplines in Eingriff steht. Innerhalb des Flexspline ist ein elektromotorisch angetriebener Wellengenerator angeordnet.

Auch aus DE 10 2007 000 945 A1 ist ein Überlagerungssteller für ein Lenksystem eines Fahrzeuges bekannt. Der Überlagerungssteller weist ein Überlagerungsgetriebe mit einer ersten Getriebeeingangswelle und einer zweiten Getriebeeingangswelle zur Überlagerung der an beiden Getriebeeingangswellen auftretenden Drehwinkeln auf eine Getriebeausgangswelle des Überlagerungsgetriebes auf, wobei die erste Getriebeeingangswelle mit einer Lenkhandhabe wirkverbunden ist. Die zweite Getriebeeingangswelle ist mit einem elektronisch kommutierten Servomotor wirkverbunden.

Aus DE 10 2011 109 170 A1 ist eine Lenkung, die eine Lenkhandhabe und einen Überlagerungssteller aufweist, bekannt. Der Überlagerungssteller wird in Abhängigkeit von einem Ist-Lenkhandhabenwinkel geregelt. Die Lenkung ist dadurch gekennzeichnet, dass eine Regelvorrichtung vorgesehen ist, die ein Verriegeln des Überlagerungsstellers auslöst, wenn ein Regelabweichungswert einen oberen Toleranzwert überschreitet und/oder wenn ein Regelabweichungswert einen unteren Toleranzwert unterschreitet. Unterschiedlichen Fahr- oder Lenksituationen sind hierbei unterschiedliche Toleranzwerte zugeordnet.

Aus DE 10 2011 053 323 A1 ist ein Wellgetriebe für ein Lenksystem eines Fahrzeugs, mit einem radialflexiblen Wälzlager mit einem Innenring, der auf eine Außenumfangsfläche eines exzentrischen Antriebskernes des Wellgetriebes gepasst ist und mit einem Außenring, der auf eine Innenumfangsfläche einer radialflexiblen Abrollbuchse wirkt, und mit radial zwischen dem Innenring und dem Außenring gehaltenen Wälzkörpern bekannt. Eine Dichteinrichtung dichtet das radialflexible Wälzlager nach außen ab. Die Dichteinrichtung weist zumindest eine Dichtscheibe auf, die drehfest mit dem exzentrischen Antriebskern verbunden ist.

DE 10 2010 037 226 B4 offenbart einen Aktuator mit einem elektrischen Überlagerungsantrieb, wobei ein Steuerungs- und Sensormodul zumindest einen Drehwinkelsensor und eine Steuerungselektronik aufweist. Die Steuerungselektronik steuert oder regelt in Abhängigkeit von Ausgangssignalen des Drehwinkelsensors die Drehrichtung und die Drehgeschwindigkeit und die Drehstellung des Überlagerungsantriebs und wobei der Drehwinkelsensor Signale bereitstellt, aus denen die Steuerungselektronik Ansteuersignale zur Steuerung oder Regelung der Kommutierung des Überlagerungsantriebs erzeugt.

Es ist die Aufgabe der vorliegenden Erfindung ein Spannungswellengetriebe anzugeben, das bei dem das Verhältnis von übertragbarem Drehmoment und radialer Baugröße besonders groß ist.

Die Aufgabe wird durch ein Spannungswellengetriebe gelöst, dass dadurch gekennzeichnet ist, dass das Verhältnis von Teilkreisdurchmesser des Außenrings zur Kranzdicke des Außenrings im Bereich von 13 bis 21, insbesondere im Bereich von 17 bis 19, insbesondere bei 17,587 liegt, und dass

 a. die Zähne der Verzahnung des Innenrings einen Profilwinkel im Bereich von 8 Grad bis 12 Grad oder im Bereich von 9 Grad bis 11 Grad oder von 11,615 Grad aufweisen, und/oder dass

b. die Zähne der Verzahnung des Außenrings einen Profilwinkel im Bereich von 8 Grad bis 14 Grad oder im Bereich von 9 Grad bis 13 Grad oder von 12,474 Grad aufweisen.

In erfindungsgemäßer Weise wurde erkannt, dass die gemeinhin vertretene Auffassung, der Außenring eines Spannungswellengetriebes müsse möglichst starr und daher radial sehr aufbauend ausgebildet sein, nicht unter allen Umständen zutreffen muss. Tatsächlich ist ein Außenring mit einer deutlich verringerten Kranzdicke insbesondere radial weniger steif, was zu erheblichen Problemen beim Betrieb des Spannungswellengetriebes führen kann. Dies insbesondere, je höher die die zu übertragenden Drehmomente sind. Beispielsweise kann es zu einem Überratschen, zu einem Klemmen, zu erhöhtem Verschleiß und/oder zu Kopfkollisionen kommen.

In erfindungsgemäßer Weise wurde jedoch erkannt, dass diese Probleme durch eine besondere Ausbildung der Verzahnung vermieden werden können. Ein wesentlicher Aspekt ist hierbei ein besonders steiler Profilwinkel. Dies insbesondere auch im Zusammenhang mit einer daran angepassten Zahnhöhe, was weiter unten im Detail erläutert ist. Es wurde weiter erkannt, dass die Verzahnung derart ausgebildet werden kann, dass die Kranzdicke gegenüber üblichen Spannungswellengetrieben sogar um einen Faktor Vier verringert werden kann, ohne dass die oben erwähnten Probleme auftreten und ohne dass der Außenring radial zusätzlich stabilisiert werden müsste.

Die erfindungsgemäße Erkenntnis, dass ein besonders gutes Verhältnis von übertragbarem Drehmoment und radialer Baugröße durch eine besondere Kombination einer verringerten Kranzdicke und einer besondere Ausbildung der Verzahnung erzielbar ist, ohne dass die oben geschilderten Probleme auftreten, ist ganz allgemein und ohne Rücksicht auf das Material des Außenrings umsetzbar. So kann beispielsweise ein Spannungswellengetriebe nach dem Stand der Technik, dessen Außenring aus einem bestimmten Material besteht, erfindungsgemäß bei gleicher Belastbarkeit hinsichtlich des zu übertragenden Drehmoments durch ein radial kleineres Spannungswellengetriebe ersetzt werden, dessen Außenring aus demselben Material besteht. Alternativ könnte das Spannungswellengetriebe nach dem Stand der Technik, dessen Außenring aus einem bestimmten Material besteht, auch durch ein erfindungsgemäßes Spannungswellengetriebe mit einem Außenring aus demselben Material ersetzt werden, das radial dieselben Abmessungen aufweist, das jedoch größere Drehmomente übertragen kann, als das Spannungswellengetriebe nach dem Stand der Technik.

Von besonderem Vorteil und insbesondere sehr kompakt ausbildbar ist eine Ausführung des Spannungswellengetriebes, bei der der Außenring Eisen beinhaltet und/oder aus Stahl besteht. Insbesondere kann der Außenring vorteilhaft aus austenitischem Stahl oder aus ferritischem Stahl gefertigt sein. Es ist auch möglich, dass der Außenring aus Titan hergestellt ist oder Titan beinhaltet. Insbesondere kann vorteilhaft vorgesehen sein, dass der Außenring eines der folgenden Elemente beinhaltet oder eine Kombination der folgenden Elemente beinhaltet: Chrom, Kobalt, Mangan, Nickel, Silizium, Wolfram, Aluminium, Beryllium, Blei, Kupfer, Molybdän, Niob, Tantal, Titan, Vanadium, Zirkon, Cer, Kohlenstoff, Phosphor, Schwefel, Stickstoff, Bor.

Bei einer besonderen Ausführung des Spannungswellengetriebes liegt die Zähneanzahl der Außenverzahnung des flexiblen Innenrings zwischen 156 und 164 Zähnen oder beträgt genau 160 Zähne, wobei die Innenverzahnung des Außenrings genau zwei Zähne mehr aufweist, als die Außenverzahnung des flexiblen Innenrings.

Bei einer besonderen Ausführung des Spannungswellengetriebes weisen die Außenverzahnung und die Innenverzahnung aufeinander abgestimmt dasselbe Modul, nämlich jeweils ein Modul im Bereich von 0,4 mm bis 0,7 mm oder im Bereich von 0,5 mm bis 0,6 mm oder im Bereich von 0,55 mm bis 0,57 mm oder von 0,56875 mm auf. Ein solches Spannungswellengetriebe und insbesondere auch ein aus diesem Spannungswellengetriebe und dem Motor bestehender Überlagerungssteller können besonders kompakt und raumsparend ausgebildet sein.

Insbesondere kann vorgesehen sein, dass die Außenverzahnung des Innenrings einen Teilkreisdurchmesser im Bereich von 90 mm bis 92 mm oder im Bereich von 90,5 mm bis 91,5 mm oder von 91,0 mm, aufweist, und/oder dass die Innenverzahnung des Außenrings einen Teilkreisdurchmesser im Bereich von 91 mm bis 93 mm oder im Bereich von 91,8 mm bis 92,3 mm oder von 92,1375 mm, aufweist. Der Teilkreisdurchmesser ist definiert als das Produkt von Zähnezahl und Modul.

Bei einer ganz besonders zuverlässigen, robusten und dennoch geräuscharm arbeitenden Ausführung weist das Spannungswellengetriebe eine Deflektion im Bereich von 1,1 mm bis 1,3 mm oder im Bereich von 1,18 mm bis 1,22 mm oder von 1,20 mm auf. Unter der Deflektion wird der radiale Weg verstanden, den ein Zahn der Außenverzahnung des Innenrings beim Wechsel zwischen Niedrig- und Hochachse zurücklegt.

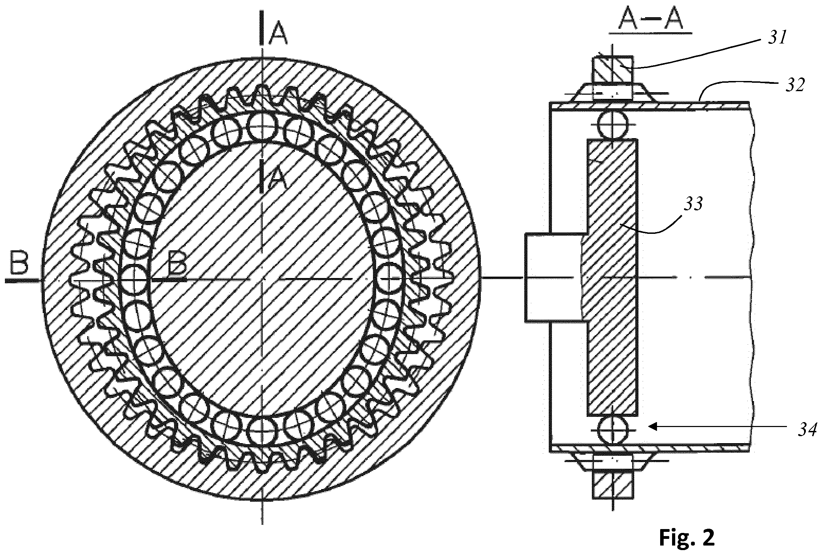

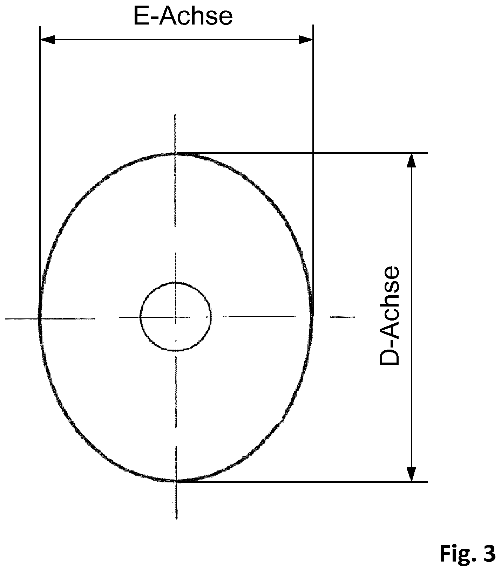

Figur 2 illustriert schematisch den Aufbau eines Spannungswellengetriebes, das unter anderem einen Außenring 31, einen Innenring 32, einen Wellengenerator 33 und ein Kugellager 34 aufweist. Figur 3 illustriert schematisch, die Hochachse D des Innenrings und die Niedrigachse E des Innenrings. Die Deflektion berechnet sich als (D - E) / 2.

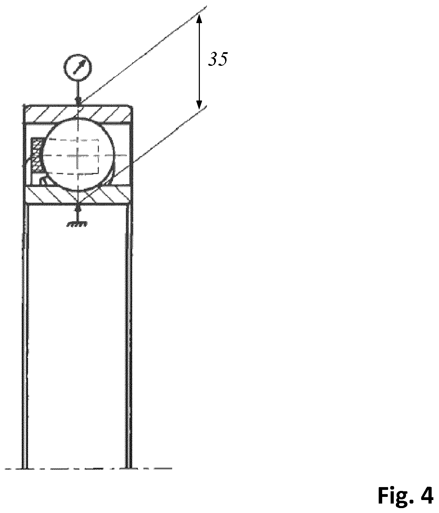

Bei einer besonderen Ausführung ist vorgesehen, dass das Spannungswellengetriebe einen Wellengenerator aufweist, der mittels eines Lagers drehbar in dem Innenring gelagert ist. In vorteilhafter Weise kann das Lager eine Schnitthöhe im Bereich von 11 mm bis 13 mm oder im Bereich von 12,1 mm bis 12,4 mm oder von 12,26 mm aufweisen. Ein Lager mit einer solchen Schnitthöhe ist, beispielsweise für die spezielle Anwendung in einer Fahrzeuglenkung, besonders langlebig und dennoch geräuscharm arbeitend ausbildbar. Dies kann, wie nachfolgend detaillierter geschildert ist, insbesondere dadurch erreicht werden, dass die Dimensionierung des Lagers speziell auf die oben genannte Deflektion abgestimmt ist. Unter der Schnitthöhe 35 wird der spielfreie radiale Abstand der den Wälzkörpern abgewandten Flächen der Lagerringe verstanden, was in Figur 4 illustriert ist.

Bei einer besonderen Ausführung weisen die Wälzkörper des Lagers, die insbesondere als Kugeln ausgebildet sein können, einen Wälzkörperdurchmesser im Bereich von 8,5 mm bis 8,9 mm oder im Bereich von 8,7 mm bis 8,8 mm oder von 8,731 mm auf.

Insbesondere kann vorteilhaft vorgesehen sein, dass bei dem Spannungswellengetriebe die Größe, die sich errechnet aus (Deflektion/Schnitthöhe) im Bereich von 0,08 bis 0,12 liegt oder im Bereich von 0,09 bis 0,11 liegt oder dass für das Spannungswellengetriebe gilt: (Deflektion/Schnitthöhe) = 0,0979.

Bei einer ganz besonders verschleißarmen Ausführung ist vorgesehen, dass bei dem Spannungswellengetriebe die Größe, die sich errechnet aus

$$(\text{Deflektion/Schnitthöhe}) \times \text{Wälzkörperdurchmesser}$$

$$(\text{„/“} = Division; \text{„x“} = Multiplikation)$$

im Bereich von 0,7 bis 1,0 liegt oder im Bereich von 0,8 bis 0,9 liegt oder dass für das Spannungswellengetriebe gilt: (Deflektion/Schnitthöhe) x Wälzkörperdurchmesser = 0,855. Bei einer solchen Ausführung ist nämlich sicher gestellt, dass der äußere Lagerring, der sich im Betrieb fortlaufend und periodisch entsprechend der Deflektion verformt, nicht vorschnell ermüdet. Darüber hinaus ist sichergestellt, dass die Hertzsche Pressung der Wälzkörper gegen die Oberfläche der Laufbahnen der Lagerringe ausreichend klein ist, um Beschädigungen, wie Graufleckigkeit oder Pittings, dauerhaft zu vermeiden.

Das Spannungswellengetriebe kann in vorteilhafter Weise derart ausgebildet sein, dass das Verhältnis aus der Deflektion und dem Teilkreisdurchmesser des Innenrings im Bereich von 0,008 bis 0,018 liegt oder im Bereich von 0,01 bis 0,016 liegt oder dass das Verhältnis aus der Deflektion und dem Teilkreisdurchmesser des Innenrings 0,0132 beträgt.

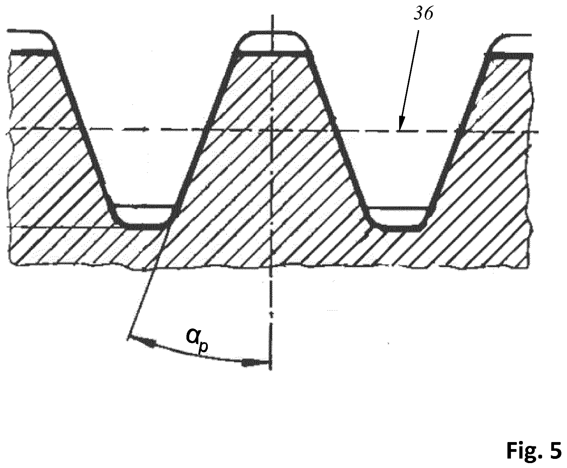

Erfindungsgemäß ist vorgesehen, dass die Zähne der Verzahnung des Innenrings einen Profilwinkel im Bereich von 8 Grad bis 15 Grad oder im Bereich von 11 Grad bis 12 Grad oder von 11,615 Grad aufweisen, und/oder dass die Zähne der Verzahnung des Außenrings einen Profilwinkel im Bereich von 8 Grad bis 15 Grad oder im Bereich von 11 Grad bis 13 Grad oder von 12,474 Grad aufweisen. Profilwinkel $\alpha p$ ist, wie Figur 5 illustriert, der Winkel der Flanke bezogen auf die Zahnmitte am Bezugsprofil. Die gestrichelt eingezeichnete Linie ist die Profilbezugslinie 36. Das Bezugsprofil ist ein allgemeingültiges Profil, unabhängig vom Modul der vorliegenden Verzahnung, welches zur Definition einer Verzahnung verwendet wird. Das Bezugsprofil entspricht einem Zahnrad mit unendlicher Zähnezahl. Durch den Zusammenhang Teilkreisdurchmesser = Modul x Zähnezahl ("x" bedeutet Multiplikation) erklärt sich bei unendlicher Zähnezahl der Umstand das der Teilkreisdurchmesser ebenfalls unendlich wird und eine Gerade (Zahnstange) entsteht.

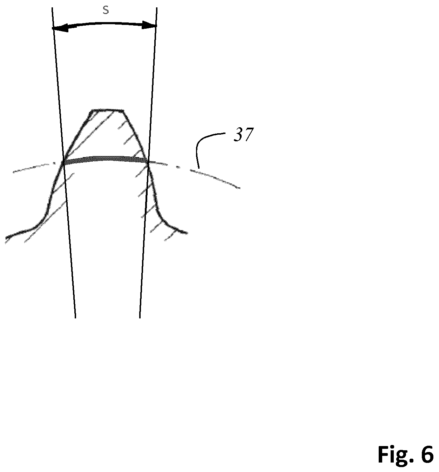

Es hat sich gezeigt, dass es für die Erfindung von besonderem Vorteil ist, wenn bei dem Spannungswellengetriebe die Zähne der Verzahnung des Innenrings eine Zahndicke am Teilkreis im Bereich von 0,7 mm bis 0,9 mm oder im Bereich von 0,75 mm bis 0,85 mm oder von 0,8 mm aufweisen, und/oder wenn die Zähne der Verzahnung des Außenrings eine Zahndicke im Bereich von 0,8 mm bis 1,1 mm oder im Bereich von 0,86 mm bis 0,96 mm oder von 0,916 mm aufweisen. Die Zahndicke s ist, wie Figur 6 illustriert, die Länge eines Bogenstückes eines Zahnes gemessen am Teilkreis 37 über die Profilbreite.

Bei einer besonderen Ausführungsform liegt bei dem Spannungswellengetriebe das Verhältnis aus der Deflektion und der Zähnezahl des Innenrings im Bereich von 0,005 bis 0,01 oder im Bereich von 0,006 bis 0,009 liegt. Insbesondere kann vorteilhaft vorgesehen sein, dass bei dem Spannungswellengetriebe das Verhältnis aus der Deflektion der Zähnezahl des Innenrings 0,0075 beträgt. Hierdurch entsteht ein besonders großer Überdeckungsgrad, der zu einer deutlichen Steigerung der Drehmomentkapazität führt. Dies ist durch eine homogenere Spannungsverteilung durch die höhere Überdeckung und den geringeren Verformungsgrad im Kranzbereich des inneren Rades zu erklären.

In besonders vorteilhafter Weise kann die Kranzdicke des Innenrings im Bereich von 0,9 mm bis 1,3 mm oder im Bereich von 1,1 mm bis 1,2 mm liegen. Insbesondere kann die Kranzdicke des Innenrings vorteilhaft 1,128 mm betragen. Hierdurch wird insbesondere das Verhältnis von Spannungen im Material im Bereich des Zahnkranzes zur Topfsteifigkeit positiv beeinflusst.

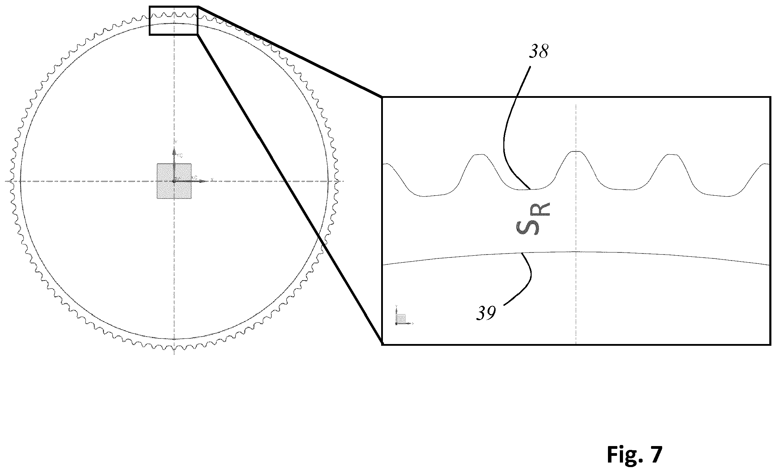

Bei einer vorteilhaften Ausführung ist vorgesehen, dass bei dem Spannungswellengetriebe das Verhältnis aus der Deflektion und der Kranzdicke des Innenrings im Bereich von 0,9 bis 1,2 liegt oder im Bereich von 1,00 bis 1,12 liegt oder dass bei dem Spannungswellengetriebe das Verhältnis aus der Deflektion der Kranzdicke des Innenrings 1,06 beträgt. Durch eine angepasste Deflektion wird, wie oben beschrieben, der Überdeckungsgrad erhöht. Ein ausgewogenes Verhältnis von Deflektion zu Kranzdicke generiert dabei geringere Kranzspannungen als bei herkömmlichen Wellgetrieben. Die Kranzdicke $s_R$ ist, wie Figur 7 illustriert, die Wandstärke zwischen der Innenfläche 39 des flexiblen Innenrings und dem Zahnfuß 38 des flexiblen Innenrings und errechnet sich als die Hälfte der Differenz von Innendurchmesser des Innenrings und Fußkreisdurchmesser des Innenrings.

In vorteilhafter Weise kann auch vorgesehen sein, dass bei dem Spannungswellengetriebe das Verhältnis aus der Deflektion und dem Profilwinkel der Zähne des Innenrings im Bereich von 0,06 bis 0,15 liegt oder im Bereich von 0,08 bis 0,12 liegt oder dass bei dem Spannungswellengetriebe das Verhältnis aus der Deflektion und dem Profilwinkel der Zähne des Innenrings 0,103 beträgt. Bei gleichbleibender Deflektion steigt der tangentiale Kraftanteil des übertragbaren Moments und die radiale Kraft sinkt. Dadurch ist es möglich, eine besonders kleine Kranzdicke des Hohlrades zu realisieren. Der kleine Profilwinkel wirkt sich zudem positiv auf den Radiallastanteil sowie das akustische Verhalten des Getriebes aus.

In ebenfalls vorteilhafter Weise kann darüber hinaus auch vorgesehen sein, dass bei dem Spannungswellengetriebe das Verhältnis aus der Deflektion und der Zahndicke der Zähne des Innenrings im Bereich von 1,1 bis 1,9 liegt oder im Bereich von 1,4 bis 1,6 liegt oder dass bei dem Spannungswellengetriebe das Verhältnis aus der Deflektion und der Zahndicke der Zähne des Innenrings 1,50 beträgt.

Bei einer ganz besonders vorteilhaften Ausführung des Spannungswellengetriebes liegt der evolventische Anteil der Verzahnungslänge des Innenrings im Bereich von 15% bis 40% oder im Bereich von 20% bis 30%. Insbesondere kann vorteilhaft vorgesehen sein, dass der evolventische Anteil der Verzahnungslänge des Innenrings 24% beträgt. Alternativ oder zusätzlich kann auch vorgesehen sein, dass der evolventische Anteil der Verzahnungslänge des Außenrings im Bereich von 19% bis 39% liegt oder im Bereich von 24% bis 34% liegt oder 29% beträgt. Eine Ausbildung der Verzahnungen von Innenring und Außenring mit den genannten evolventischen Anteilen hat den besonderen Vorteil eines geringen Wälzanteils und eines höheren Gleitanteils, was sich besonders vorteilhaft auf die Geräuschentwicklung auswirkt. Der evolventische Anteil der Verzahnungslänge ist der Anteil, der das sich dadurch auszeichnet, dass der Abschnitt der Verzahnung einer vom Grundkreis ausgehenden Evolvente gleicht.

Die Zähne des Innenrings können eine vordere und/oder hintere Rücknahme aufweisen. Hierdurch wird eine Verbesserung des Zahneingriffs erreicht. Es kann, alternativ oder zusätzlich, auch vorgesehen sein, dass der Verlauf der Zahnkopfhöhe über die Zahnbreite einen balligen Verlauf aufweist.

Bei einer besonderen Ausführung ist vorgesehen, dass der Zahnkopf und der Zahnfuß parallel verlaufen.

Es kann, insbesondere um Zahnkopfkollisionen zu vermeiden und akustische Anregung zu reduzieren, vorteilhaft auch vorgesehen sein, dass der Verlauf der Zahnkopfhöhe des Innenrings entlang der Zahnbreite wenigstens eines Zahnes, vorzugsweise jedes Zahnes, wenigstens in einem Zahneingriffsbereich keinen zur Mittelachse parallelen Linearanteil aufweist. Diesbezüglich wurde erkannt, dass die bislang übliche Zahngeometrie am flexiblen Innenring, die einen symmetrischen Querschnittsverlauf mit einer vorderen und einer hinteren Zahnrücknahme und zumeist einen zylindrischen Zahnanteil aufweist, einen Flankenkontaktbereich im vorderen (dem Flextopfboden abgewandten) Bereich der Verzahnung bedingt. Bei einer Veränderung des zu übertragenden Drehmomentes verschiebt sich dieser Flankenkontaktbereich bedingt durch die Radialanteile der Zahnkräfte auf den zylindrischen Teil (Verlauf der Zahnkopfhöhe entlang der Zahnbreite parallel zur Mittelachse) der Verzahnung. Durch diesen Umstand wird der Flankenkontaktbereich weiter in die Mitte der Verzahnung verlagert. Dies geht mit einem stark progressiven Steifigkeitsanstieg einher, der direkte Auswirkungen auf die Flankenpressung der Innenringverzahnung mit der Verzahnung des Außenrings hat. Es wurde erkannt, dass insbesondere durch diese Flankenpressung und dem punktuellen Flankenkontaktbereich zur Anregung einer Schwingung kommen kann, die sich negativ auf das akustische Verhalten des Gesamtsystems auswirkt.

Bei einer vorteilhaften Ausführung entfällt der zylindrische Anteil der Verzahnung des flexiblen Innenrings gänzlich. Insbesondere kann dies vorteilhaft beispielsweise dadurch erreicht werden, dass ein Verlauf der Zahnkopfhöhe entlang der Zahnbreite - wenigstens in dem Zahneingriffsbereich - gewählt wird, der durch ein Polynom n-ter Ordnung beschreibbar ist, wobei n größer als 1 ist.

Bei einer besonderen Ausführung ist vorgesehen, dass der Verlauf der Zahnkopfhöhe des Innenrings entlang der Zahnbreite wenigstens eines Zahnes, vorzugsweise jedes Zahnes, wenigstens in einem Zahneingriffsbereich frei von einem Linearanteil ist und/oder dass der Verlauf der Zahnkopfhöhe entlang der Zahnbreite wenigstens eines Zahnes, vorzugsweise jedes Zahnes, wenigstens in einem Zahneingriffsbereich wenigstens einen nichtlinearen Abschnitt aufweist und/oder dass der Verlauf der Zahnkopfhöhe entlang der Zahnbreite wenigstens eines Zahnes, vorzugsweise jedes Zahnes, wenigstens in einem Zahneingriffsbereich asymmetrisch ist.

Durch Reduktion oder gänzliches Vermeiden der Linearanteile des Verlaufs der Zahnkopfhöhe entlang der Zahnbreite, insbesondere durch den Entfall des zylindrischen Anteils weist, der Steifigkeitsverlauf nicht mehr den oben beschriebenen, stark progressiven Verlauf auf. Insbesondere wird der Flankenkontaktbereich entlang der Eingriffsachse vergrößert. Des Weiteren wird erfindungsgemäß hierdurch der radiale Gleitanteil der Flanken des flexiblen Innenrings in Bezug auf die Verzahnung des Außenrings reduziert, was die Anregung von Schwingungen durch mögliche Auffälligkeiten der Flankentopologie reduziert.

Bei einer besonderen Ausführung ist der Verlauf der Zahnkopfhöhe des Innenrings entlang der Zahnbreite im mathematischen Sinne stetig. Insbesondere kann, wie bereits erwähnt vorteilhaft vorgesehen sein, dass der Verlauf der Zahnkopfhöhe entlang der Zahnbreite durch ein Polynom n-ter Ordnung beschreibbar ist, wobei n größer als 1 ist und/oder dass der Verlauf der Zahnkopfhöhe entlang der Zahnbreite abschnittsweise durch je ein Polynom n-ter Ordnung beschreibbar ist, wobei n größer als 1 ist.

Bei einer besonderen Ausführung ist vorgesehen, dass der Verlauf der Zahnkopfhöhe entlang der Zahnbreite stetig bis auf die Zahnkopfhöhe Null abfällt und/oder dass das Getriebebauteil als topfförmiger Innenring ausgebildet ist und dass die Zahnkopfhöhe in Richtung des Topfbodens stetig bis auf die Zahnkopfhöhe Null abfällt.

Durch die beschriebenen, erfindungsgemäß möglichen Verläufe der Zahnkopfhöhe, insbesondere des Teils zum Topfboden gerichteten Abfalls der Zahnkopfhöhe, der vorzugsweise durch ein Polynom höherer Ordnung als 1 beschrieben werden kann, wird zusätzlich erreicht, dass besonders hohe Drehmomente übertragen werden können, ohne dass es zu einem Überratschen kommt. Kurz: Eine solche Ausführung weist ein hohes Überratschmoment auf. Je nach Untersetzung und Baugröße kann dies insbesondere dadurch unterstützt sein, dass die Zahnkopfhöhe in Richtung des Topfbodens stetig bis auf die Zahnkopfhöhe Null abfällt.

Bei einer besonderen Ausführung ist vorgesehen, dass jeder Zahnfuß entlang der Zahnfußbreite linear verläuft oder dass der Verlauf der Zahnfüße parallel zum Verlauf der Zahnköpfe ist. Je nach Anwendung kann jedoch auch vorgesehen sein, dass der Zahnfußverlauf anders ausgebildet ist.

Bei einer besonderen Ausführung ist vorgesehen, dass der Verlauf der Zahnkopfhöhe jedes Zahnes der Innenverzahnung des Außenrings entlang der Zahnkopfbreite asymmetrisch ist.

Es kann vorteilhaft insbesondere vorgesehen sein, dass der Verlauf der Zahnkopfhöhe wenigstens eines Zahnes, vorzugsweise jedes Zahnes, der Innenverzahnung des Außenrings entlang der Zahnkopfbreite wenigstens in einem Zahneingriffsbereich durch ein Polynom n-ter Ordnung beschreibbar ist, wobei n größer als 1 ist und/oder dass der Verlauf der Zahnkopfhöhe wenigstens eines Zahnes, vorzugsweise jedes Zahnes, der Innenverzahnung entlang der Zahnkopfbreite wenigstens in einem Zahneingriffsbereich abschnittsweise durch je ein Polynom n-ter Ordnung beschreibbar ist, wobei n größer als 1 ist.

Bei einer besonderen Ausführung ist vorgesehen, dass der Verlauf der Zahnkopfhöhe wenigstens eines Zahnes der Innenverzahnung des Außenrings, vorzugsweise jedes Zahnes der Innenverzahnung, einen ansteigenden Abschnitt und einen abfallenden Abschnitt aufweist, wobei die Beträge der Steigungswinkel des ansteigenden und des abfallenden Abschnitts unterschiedlich sind.

Besonders vorteilhaft ist eine Ausführung bei der vorgesehen ist, dass der Innenring als Flextopf ausgebildet ist und dass der Verlauf der Zahnkopfhöhe wenigstens eines Zahnes der Innenverzahnung, vorzugsweise jedes Zahnes der Innenverzahnung, einen dem Topfboden zugewandten Abschnitt und einen vom Topfboden abgewandten Abschnitt aufweist, wobei der Betrag des Steigungswinkels des dem Topfboden zugewandten Abschnitts relativ zu einer zur Mittelachse parallelen Achse größer ist, als der der Betrag des Steigungswinkels des vom Topfboden abgewandten Abschnitts relativ zu der zur Mittelachse parallelen Achse. Eine solche Ausführung bietet einerseits Vorteile hinsichtlich der Vermeidung einer Kopfkollision und hinsichtlich einer Geräuschreduzierung, jedoch auch in Bezug auf das maximal übertragbare Drehmoment, also ein besonders großes Überraschmoment.

Alternativ oder zusätzlich kann vorgesehen sein, dass der Verlauf der Zahnkopfhöhe wenigstens eines Zahnes der Innenverzahnung, vorzugsweise jedes Zahnes der Innenverzahnung, einen ansteigenden Abschnitt und einen abfallenden Abschnitt und zwischen diesen Abschnitten einen zur Mittelachse parallelen Abschnitt aufweist.

Alternativ zu einer Ausführung, bei der der Verlauf der Zahnkopfhöhe wenigstens eines Zahnes der Innenverzahnung, vorzugsweise jedes Zahnes der Innenverzahnung, entlang der Zahnkopfbreite der Innenverzahnung ansteigt und wieder abfällt kann vorgesehen sein, dass die Zähne der Innenverzahnung ausschließlich eine einseitige Zahnrücknahme aufweisen. Eine solche Ausführung weist (ohne Verzicht auf die Vorteile der Vermeidung einer Kopfkollision und hinsichtlich einer Geräuschreduzierung) ein ganz besonders hohes Überraschmoment auf.

Um die oben beschriebenen Vorteile des Spannungswellengetriebes wenigstens zum Teil zu erreichen ist es auch möglich, dass der flexible Innenring statt zwischen 154 und 166 Zähnen, eine Zähnezahl im Bereich von 308 bis 332 Zähnen, insbesondere von genau 320 Zähnen aufweist und dass der Außenring genau vier Zähne mehr auf seiner Innenverzahnung aufweist, als der flexible Innenring. Hierbei kann insbesondere vorgesehen sein, dass die Außenverzahnung und die Innenverzahnung jeweils einen Modulwert aufweisen, der der Hälfte des in Anspruch 2 genannten Modulwerts entspricht.

Alternativ kann das Spannungswellengetriebe auch derart ausgebildet sein, dass der Innenring statt an zwei Stellen an drei Stellen in den Außenring eingreift und dass der flexible Innenring statt zwischen 154 und 166 Zähnen, eine Zähnezahl im Bereich von 231 bis 249 Zähnen, insbesondere von genau 240 Zähnen aufweist und dass der Außenring genau drei Zähne mehr aufweist, als der flexible Innenring. Hierbei kann insbesondere vorgesehen sein, dass die Außenverzahnung und die Innenverzahnung jeweils einen Modulwert aufweisen, der der 2/3 des in Anspruch 2 genannten Modulwerts entspricht.

Als weitere Alternative kann das Spannungswellengetriebe auch in der Weise ausgebildet sein, dass der Innenring statt an zwei Stellen an vier Stellen in den Außenring eingreift und dass der Außenring statt zwei genau vier Zähne mehr aufweist, als der flexible Innenring. Eine solche Ausführung ist jedoch deutlich aufwändiger, als eine Ausführung mit zwei Eingriffsstellen, wie sie oben beschrieben ist.

Von besonderem Vorteil ist ein Aktuator, der ein als erfindungsgemäßes Spannungswellengetriebe ausgebildetes Überlagerungsgetriebe und einen Motor, der eine Welle des Spannungswellengetriebes antreibt, aufweist. Insbesondere kann der Aktuator beispielsweise als Überlagerungssteller für eine Fahrzeuglenkung ausgebildet sein, der dazu ausgebildet und bestimmt ist, den mit einer Lenkhandhabe ausgeübten Lenkbewegungen zusätzliche Lenkbewegungen zu überlagern.

Vorzugsweise ist der Motor des Aktuators ganz speziell auf die oben genannten Ausprägungen des Spannungswellengetriebes abgestimmt. Hierbei kann vorteilhaft vorgesehen sein, dass mehr als zwei Spulen des Motors auf eine gemeinsame Motorphase geschaltet sind und/oder dass wenigstens ein Zahn des Motors mit wenigstens zwei zueinander parallel geschalteten Drähten bewickelt ist. Eine solche Ausführung hat den besonderen Vorteil, dass auf einfache Weise sichergestellt werden kann, dass der Motor ein zum Betreiben der Fahrzeuglenkung ausreichendes Drehmoment aufbringen kann.

In vorteilhafter Weise kann auch vorgesehen sein, dass auf wenigstens einem Statorzahn, insbesondere auf allen Statorzähnen, jeweils genau 17 Windungen vorhanden sind. Ganz besonders vorteilhaft ist eine Ausführung, bei der auf wenigstens einem Statorzahn mehr als 17, insbesondere genau 18 oder 19, Windungen vorhanden sind, und/oder dass bei dem Motor die Spulenquerschnittsfläche pro Spulenzahn größer als 1,4 mm$^2$ ist; dies unabhängig davon, auf wie viele Drähte sich die Spulenquerschnittsfläche verteilt. Eine solche Ausführung kann hierdurch vorteilhafter Weise derart ausgebildet sein, dass ein ausreichendes Drehmoment zur Verfügung gestellt ist.

Von besonderem Vorteil ist es außerdem, wenn der Rotor des Motors mehr als 4 Polpaare aufweist. Außerdem kann vorgesehen sein, dass die Länge der Magnete ca. 20 mm, insbesondere 19,7 mm, beträgt. Ganz besonders vorteilhaft ist eine Ausführung, bei der die Länge der Magnete mehr als 20 mm beträgt. Eine solche Ausführung kann hierdurch vorteilhafter Weise derart ausgebildet sein, dass ein ausreichendes Drehmoment zur Verfügung gestellt ist.

In vorteilhafter Weise kann außerdem und unabhängig von den vorgenannten Maßnahmen vorgesehen sein, dass der Kopfkreisdurchmesser der Magnete ca. 40 mm beträgt. Insbesondere kann vorteilhaft vorgesehen sein, dass der Kopfkreisdurchmesser der Magnete größer als 40 mm ist. Es ist - alternativ oder zusätzlich - in vorteilhafter Weise auch möglich, dass der Außendurchmesser des Rotors im Bereich von 42 mm bis 46 mm liegt oder dass der Außendurchmesser des Rotors 45 mm beträgt.

Bei einer vorteilhaften Ausführungsform, die sowohl besonders kompakt, als auch besonders robust ausgebildet werden kann, sind der Motor und das Spannungswellengetriebe koaxial zueinander angeordnet. Alternativ oder zusätzlich kann auch vorgesehen sein, dass der Motor und das Spannungswellengetriebe gemeinsam einen Überlagerungssteller bilden und/oder dass der Motor und das Spannungswellengetriebe in einem gemeinsamen Gehäuse angeordnet sind. Das Gehäuse kann mit einer Fahrzeugkarosserie drehfest verbunden sein.

Insbesondere kann vorgesehen sein, dass der Motor und das Spannungswellengetriebe gemeinsam einen Überlagerungssteller bilden, der eine mit der Lenkhandhabe mechanisch verbundene Eingangswelle und eine von dem Motor angetriebene, mit einem Wellengenerator des Spannungswellengetriebes mechanisch verbundene, koaxial zur Eingangswelle angeordnete Antriebswelle aufweist.

Von besonderem Vorteil ist aus den oben genannten Gründen eine Fahrzeuglenkung, die einen solchen Überlagerungssteller aufweist.

Das erfindungsgemäße Spannungswellengetriebe und/oder der oben beschriebene Aktuator lassen sich besonders vorteilhaft in einem aktiven Fahrwerk einsetzen. Hier kommt der besondere Vorteil besonders zum Tragen, dass das erfindungsgemäße Spannungswellengetriebe radial weniger Bauraum beansprucht. Das Fahrwerk kann insbesondere als radselektives Fahrwerk ausgebildet sein, bei dem jedem Rad ein eigener Aktuator zugeordnet ist.

Ganz allgemein können das erfindungsgemäße Spannungswellengetriebe und/oder der oben beschriebene Aktuator, der wenigstens ein solches Spannungswellengetriebe beinhaltet, vorteilhaft und unter besonders gute Bauraumausnutzung auch an anderen Stellen oder in anderen Aggregaten eines Kraftfahrzeuges zum Einsatz kommen.

Besonders vorteilhaft ist ein motorisiertes Gelenk zum Verbinden von zwei relativ zueinander beweglichen Trägern eines programmierbaren Bewegungsautomaten, das ein erfindungsgemäßes Spannungswellengetriebe und/oder einen erfindungsgemäßen Aktuator aufweist. Ein solches Gelenk kann bei hoher Belastbarkeit und Leistungsfähigkeit vorteilhaft besonders kompakt ausgebildet werden. Insbesondere kann ein programmierbarer Bewegungsautomat vorteilhaft wenigstens ein motorisiertes Gelenk mit einem solchen Spannungswellengetriebe und/oder einem solchen Aktuator aufweisen.

Insbesondere im Hinblick auf eine kompakte Bauform bei hoher Belastbarkeit und Leistungsfähigkeit ist ein programmierbarer Bewegungsautomat ganz besonders vorteilhaft, der ein erfindungsgemäßes Spannungswellengetriebe und/oder einen erfindungsgemäßen Aktuator aufweist.

Von besonderem Vorteil ist ein programmierbarer Bewegungsautomat mit zwei Trägern, die mittels eines erfindungsgemäßen motorisierten Gelenks relativ zueinander beweglich verbunden sind. Hierbei kann insbesondere vorteilhaft vorgesehen sein, dass einer der Träger direkt oder indirekt drehfest mit einem Stator des Antriebsmotors und/oder einem Antriebsmotorgehäuse des Antriebsmotors verbunden ist, während der andere der Träger drehfest an ein Abtriebselement des Spannungswellengetriebes angekoppelt ist.

Die zwei mittels des motorisierten Gelenks beweglich verbundenen Träger können beispielsweise Teil eines Roboterarmes sein. Insbesondere kann das motorisierte Gelenk eine, insbesondere elektrisch aktivierbare, Feststellvorrichtung zum Arretieren der Träger relativ zueinander aufweisen.

Bei einer besonderen Ausführung weist das motorisierte Gelenk zwei relativ zueinander bewegliche Gehäuseteile auf, wobei der Antriebsmotor in einem der Gehäuseteile angeordnet ist und das Spannungswellengetriebe in dem anderen Gehäuseteil angeordnet ist. Alternativ oder zusätzlich kann auch vorgesehen sein, dass ein Teil des Spannungswellengetriebes in einem der Gehäuseteile angeordnet ist und ein anderer Teil des Getriebes in dem anderen Gehäuseteil angeordnet ist. Insbesondere kann ein Gehäuseteil dazu ausgebildet und angeordnet sein, starr direkt oder indirekt mit einem der Träger verbunden zu werden, während das andere Gehäuseteil dazu ausgebildet und angeordnet ist, starr mit dem anderen Träger verbunden zu werden. Es ist alternativ auch möglich, dass ein Gehäuse eines ersten Trägers zusätzlich auch als ein erstes Gehäuseteil fungiert und/oder dass ein Gehäuse eines zweiten Trägers zusätzlich auch als zweites Gehäuseteil fungiert.

Bei einer besonderen Ausführung ist das motorisierte Gelenk dazu ausgebildet, zwei Träger derart zu verbinden, dass die Ebene in der sich einer der Träger bewegt und die Ebene in der sich der andere Träger bewegt stets parallel zueinander angeordnet sind. Bei einer anderen Ausführung ist das Gelenk dazu ausgebildet, zwei Träger derart zu verbinden, dass die Ebene in der sich einer der Träger bewegt und die Ebene in der sich der andere Träger bewegt stets senkrecht zueinander angeordnet sind.

Insbesondere kann das das Gelenk als Scharniergelenk ausgebildet sein

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind.

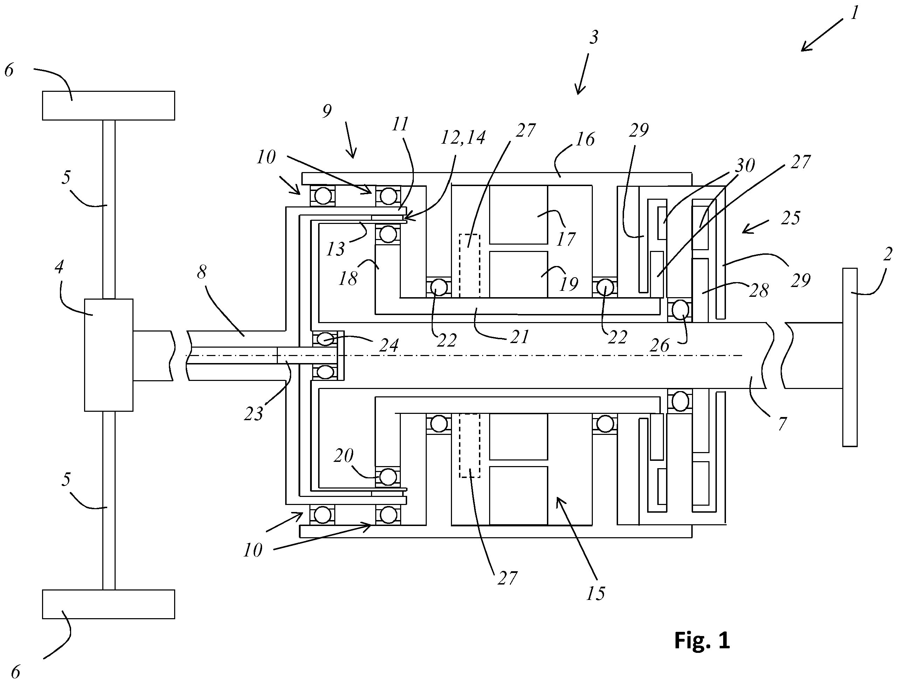

Fig. 1 zeigt ein Ausführungsbeispiel einer Fahrzeuglenkung 1, die einen Aktuator beinhaltet, der als Überlagerungssteller 3 ausgebildet ist und der ein Ausführungsbeispiel eines erfindungsgemäßen Spannungswellengetriebes 9 aufweist. Die Fahrzeuglenkung 1 weist eine Lenkhandhabe 2, die mit dem Überlagerungssteller 3 wirkverbunden ist. Der Überlagerungssteller 3 hat die Funktion, den mit einer Lenkhandhabe 2 ausgeübten Lenkbewegungen zusätzliche Lenkbewegungen zu überlagern. Die von dem Fahrer mit der Lenkhandhabe 2 ausgeübten Lenkbewegungen werden zusammen mit den zusätzlichen Lenkbewegungen über einen Lenkgetriebe 4 und über Spurstangen 5 zu den Rädern 6 übertragen und die Radlenkwinkel der Räder 6 entsprechend eingestellt.

Der Überlagerungssteller 3 weist eine Eingangswelle 7 auf, die mit der Lenkhandhabe 2 mechanisch verbunden ist. Der Überlagerungssteller 3 hat außerdem eine Ausgangswelle 8, die mechanisch an das Lenkgetriebe 4 angekoppelt ist.

Das Spannungswellengetriebe 9 weist die Ausgangswelle 8 auf, die mittels eines Abtriebslagers 10 drehbar gelagert ist. Die Ausgangswelle 8 ist fest mit einem Außenring 11 verbunden, der eine Innenverzahnung 12 aufweist. Das Spannungswellengetriebe 9 weist außerdem einen in radialer Richtung flexiblen Innenring 13 auf, der eine Außenverzahnung 14 aufweist. Die Außenverzahnung 14 des flexiblen Innenrings 11 weist genau 160 Zähne auf, während die Innenverzahnung 12 des Außenrings 11 genau 162 Zähne aufweist. Die Außenverzahnung 14 des flexiblen Innenrings 11 ist mit der Innenverzahnung 12 des Außenrings 11 an zwei einander gegenüberliegenden Stellen in Eingriff.

Das Verhältnis von Teilkreisdurchmesser des Außenrings 11 zur Kranzdicke des Außenrings 11 liegt im Bereich von 15 bis 20. Die Zähne der Verzahnung des Innenrings 13 weisen alle denselben Profilwinkel, nämlich jeweils einen Profilwinkel im Bereich von 8 Grad bis 15 Grad, insbesondere von genau 11,615 Grad, auf, während die Zähne der Verzahnung des Außenrings 11 jeweils einen Profilwinkel im Bereich von 8 Grad bis 15 Grad, insbesondere von genau 12,474 aufweisen.

Der flexible Innenring 13 ist drehfest mit der Eingangswelle 7 verbunden.

Der Überlagerungssteller 3 weist außerdem einen elektrischen Überlagerungsantrieb 15 auf, der einen an einem Gehäuse 16 befestigten Stator 17 und einen drehfest zu einem Wellengenerator 18 angeordneten Rotor 19 aufweist. Das Gehäuse 16 kann mit einer Fahrzeugkarosserie drehfest verbunden sein.

Der Wellengenerator 18 ist mit einem Wellengeneratorlager 20 versehen, das es ermöglicht, den Wellengenerator 18 innerhalb des Innenrings 13 zu drehen, wobei der Innenring 13 von dem Wellengenerator 18 und seinem Wellengeneratorlager 20 in eine ovale Form gedrückt wird, die bei Drehung des Wellengenerators 18 innerhalb des Innenrings 13 umläuft, so dass sich die Außenverzahnung 14 des Innenrings 13 auf der Innenverzahnung 12 des Außenrings 11 abwälzt. Der Wellengenerator 18 ist mit einer als Hohlwelle ausgebildeten Antriebswelle 21 verbunden, die mittels mindestens eines Lagers 22, insbesondere zwei Lager, drehbar an dem Gehäuse 16 gelagert ist.

Die Ausgangswelle 8 ist ebenfalls wenigstens teilweise als Hohlwelle ausgeführt, in der ein Zentrierdorn 23 verankert ist. Der Zentrierdorn 23 dient dazu, die Ausgangswelle 8 und die Eingangswelle 7 mittels eines weiteren Lagers 24 zueinander drehbar zu zentrieren und zu lagern.

Der Überlagerungssteller 3 weist ein Lagermodul 25 auf, das ein Lager 26 zur drehbaren Lagerung der Eingangswelle 7 aufweist. Innerhalb des Lagermoduls 25 ist ein Drehwinkelsensor 27 vorgesehen, dessen Ausgangssignale dazu verwendet werden, die Kommutierung des elektrischen Überlagerungsantriebs 15 zu steuern bzw. zu regeln. Der Drehwinkelsensor 27 kann in einer alternativen Ausführung nicht im Lagermodul 25 vorgesehen sein, sondern benachbart zu dem Rotor 19 in einem Bereich zwischen dem Rotor 19 und dem Wellengenerator 18. Dieser Drehwinkelsensor 27 ist in Figur 1 gestrichelt dargestellt.

Die Kommutierung des Überlagerungsantriebs 15 wird von einer Gesamtelektronik 30 gesteuert, die die Ausgangssignale des Drehwinkelsensors 27 empfängt. Die Gesamtelektronik 30 kann aus mehreren Bestandteilen bestehen, wie schematisch in Figur 1 dargestellt ist. Zudem kann die Gesamtelektronik 30 in einer alternativen Ausführung als Wegbausteuergerät außerhalb des Überlagerungsstellers angeordnet sein.

Der Überlagerungssteller 3 kann mit einem in den Überlagerungssteller integrierten Lenkwinkelsensor 28 ausgerüstet sein. Konkret ist der Lenkwinkelsensor 28 ebenfalls in dem Lagermodul 25 angeordnet und dazu ausgebildet, die Drehwinkelstellung der Eingangswelle 7 kontinuierlich zu messen und entsprechende Signale an die Gesamtelektronik 30 zu senden. Der Lenkwinkelsensor 28 kann in einer alternativen Ausführung im Bereich der Lenkhandhabe 2 angeordnet sein.

Die Gesamtelektronik 30 beinhaltet eine Überlagerungselektronik, die den Überlagerungsantrieb 15 in Abhängigkeit von Signalen des Lenkwinkelsensors 28 und in Abhängigkeit von weiteren Parametern bezüglich des Fahrzustandes, die die Gesamtelektronik 30 von außen empfängt, regelt.

Das Lagermodul 25 weist ein eigenes Gehäuse 29 auf. Dieses bildet einen Deckel für das Gehäuse 16 des Überlagerungsstellers 3 und dichtet das Gehäuse 16 gleichzeitig ab.

**Bezugszeichenliste**:

| | |
|---|---|
| 1 | Fahrzeuglenkung |
| 2 | Lenkhandhabe |
| 3 | Überlagerungssteller |
| 4 | Lenkgetriebe |
| 5 | Spurstangen |
| 6 | Räder |
| 7 | Eingangswelle |
| 8 | Ausgangswelle |
| 9 | Spannungswellengetriebe |
| 10 | Abtriebslager |
| 11 | Außenring |
| 12 | Innenverzahnung |
| 13 | Innenring |
| 14 | Außenverzahnung |
| 15 | Überlagerungsantrieb |
| 16 | Gehäuse |
| 17 | Stator |
| 18 | Wellengenerator |
| 19 | Rotor |
| 20 | Wellengeneratorlager |
| 21 | Antriebswelle |
| 22 | Lager |
| 23 | Zentrierdorn |
| 24 | weiteres Lager |
| 25 | Lagermodul |
| 26 | Lager zur drehbaren Lagerung der Eingangswelle 7 |
| 27 | Drehwinkelsensor |
| 28 | Lenkwinkelsensor |
| 29 | Gehäuse des Lagermoduls 25 |
| 30 | Gesamtelektronik |
| 31 | Außenring |
| 32 | Innenring |
| 33 | Wellengenerator |
| 34 | Kugellager |
| 35 | Schnitthöhe |

36      Profilbezugslinie
37      Teilkreis
38      Zahnfuß
39      Innenfläche des Innenrings


**Patentansprüche**

**1.** Spannungswellengetriebe (9), das einen Außenring (11, 31) mit einer Innenverzahnung (12) aufweist, in den an zwei gegenüberliegenden Stellen ein flexibler Innenring (13, 32) mit einer Außenverzahnung (14) eingreift, **dadurch gekennzeichnet, dass** das Verhältnis von Teilkreisdurchmesser des Außenrings (11, 31) zur Kranzdicke des Außenrings (11, 31) im Bereich von 15 bis 20, insbesondere im Bereich von 16 bis 18, insbesondere bei 17,587 liegt und dass

   a. die Zähne der Verzahnung des Innenrings (13, 32) einen Profilwinkel im Bereich von 8 Grad bis 15 Grad oder im Bereich von 11 Grad bis 12 Grad oder von 11,615 Grad aufweisen, und/oder dass
   b. die Zähne der Verzahnung des Außenrings (11, 31) einen Profilwinkel im Bereich von 8 Grad bis 15 Grad oder im Bereich von 11 Grad bis 12 Grad oder von 12,474 Grad aufweisen.

**2.** Spannungswellengetriebe (9) nach Anspruch 1, **dadurch gekennzeichnet, dass**

   a. die Zähnenanzahl der Außenverzahnung (14) des flexiblen Innenrings (13, 32) zwischen 154 und 166 Zähnen liegt oder genau 160 Zähne beträgt und dass die Innenverzahnung (12) des Außenrings (11, 31) genau zwei Zähne mehr aufweist, als die Außenverzahnung (14) des flexiblen Innenrings (13, 32), und/oder dass
   b. der Außenring (11, 31) eine Kranzdicke im Bereich von 3 mm bis 8 mm, insbesondere im Bereich von 4 mm bis 6 mm, insbesondere von 5 mm, aufweist und/oder dass
   c. der Außenring (11, 31) Eisen beinhaltet und/oder dass der Außenring (11, 31) aus Stahl besteht.

**3.** Spannungswellengetriebe (9) nach Anspruch 1 oder 2, **dadurch gekennzeichnet, dass**

   a. die Außenverzahnung (14) und die Innenverzahnung (12) jeweils ein Modul im Bereich von 0,4 mm bis 0,7 mm oder im Bereich von 0,5 mm bis 0,6 mm oder im Bereich von 0,55 mm bis 0,57 mm oder von 0,56875 mm aufweist, und/oder dass
   b. die Außenverzahnung (14) des Innenrings (13, 32) einen Teilkreisdurchmesser im Bereich von 90 mm bis 92 mm oder im Bereich von 90,5 mm bis 91,5 mm oder von 91,0 mm, aufweist, und/oder dass
   c. die Innenverzahnung (12) des Außenrings (11, 31) einen Teilkreisdurchmesser im Bereich von 91 mm bis 93 mm oder im Bereich von 91,8 mm bis 92,3 mm oder von 92,1375 mm, aufweist, und/oder dass
   d. das Spannungswellengetriebe (9) eine Deflektion im Bereich von 1,1 mm bis 1,3 mm oder im Bereich von 1,18 mm bis 1,22 mm oder von 1,20 mm aufweist.

**4.** Spannungswellengetriebe (9) nach einem der Ansprüche 1 bis 3, **dadurch gekennzeichnet, dass** das Spannungswellengetriebe (9) einen Wellengenerator (18, 33) aufweist, der mittels eines Lagers (22) drehbar in dem Innenring (13, 32) gelagert ist.

**5.** Spannungswellengetriebe (9) nach Anspruch 4, **dadurch gekennzeichnet, dass**

   a. das Lager (22) eine Schnitthöhe (35) im Bereich von 11 mm bis 13 mm oder im Bereich von 12,1 mm bis 12,4 mm oder von 12,26 mm aufweist, und/oder dass
   b. die Wälzkörper des Lagers (22), insbesondere Kugeln, einen Wälzkörperdurchmesser im Bereich von 8,5 mm bis 8,9 mm oder im Bereich von 8,7 mm bis 8,8 mm oder von 8,731 mm aufweisen, und/oder dass
   c. bei dem Spannungswellengetriebe (9) die Größe, die sich errechnet aus (Deflektion/Schnitthöhe (35)) im Bereich von 0,08 bis 0,12 liegt oder im Bereich von 0,09 bis 0,11 liegt oder dass für das Spannungswellengetriebe (9) gilt: (Deflektion/Schnitthöhe (35)) = 0,0979, und/oder dass
   d. bei dem Spannungswellengetriebe (9) die Größe, die sich errechnet aus (Deflektion/Schnitthöhe (35)) x Wälzkörperdurchmesser im Bereich von 0,7 bis 1,0 liegt oder im Bereich von 0,8 bis 0,9 liegt oder dass für das Spannungswellengetriebe (9) gilt: (Deflektion/Schnitthöhe (35)) x Wälzkörperdurchmesser = 0,855.

**6.** Spannungswellengetriebe (9) nach einem der Ansprüche 1 bis 5, **dadurch gekennzeichnet, dass**

a. bei dem Spannungswellengetriebe (9) das Verhältnis aus der Deflektion und dem Teilkreisdurchmesser des Innenrings (13, 32) im Bereich von 0,008 bis 0,018 liegt oder im Bereich von 0,01 bis 0,016 liegt oder dass bei dem Spannungswellengetriebe (9) das Verhältnis aus der Deflektion und dem Teilkreisdurchmesser des Innenrings (13, 32) 0,0132 beträgt, und/oder dass

b. bei dem Spannungswellengetriebe (9) die Zähne der Verzahnung des Innenrings (13, 32) eine Zahndicke im Bereich von 0,7 mm bis 0,9 mm oder im Bereich von 0,75 mm bis 0,85 mm oder von 0,8 mm aufweisen, und/oder dass bei dem Spannungswellengetriebe (9) die Zähne der Verzahnung des Außenrings (11, 31) eine Zahndicke im Bereich von 0,8 mm bis 1,1 mm oder im Bereich von 0,86 mm bis 0,96 mm oder von 0,916 mm aufweisen, und/oder dass

c. bei dem Spannungswellengetriebe (9) das Verhältnis aus der Deflektion und der Zähnezahl des Innenrings (13, 32) im Bereich von 0,005 bis 0,01 liegt oder im Bereich von 0,006 bis 0,009 liegt oder dass bei dem Spannungswellengetriebe (9) das Verhältnis aus der Deflektion der Zähnezahl des Innenrings (13, 32) 0,0075 beträgt, und/oder dass

d. die Kranzdicke des Innenrings (13, 32) im Bereich von 0,9 mm bis 1,3 mm oder im Bereich von 1,1 mm bis 1,2 mm liegt oder dass die Kranzdicke des Innenrings (13, 32) 1,128 mm beträgt, und/oder dass

e. bei dem Spannungswellengetriebe (9) das Verhältnis aus der Deflektion und der Kranzdicke des Innenrings (13, 32) im Bereich von 0,9 bis 1,2 liegt oder im Bereich von 1,00 bis 1,12 liegt oder dass bei dem Spannungswellengetriebe (9) das Verhältnis aus der Deflektion der Kranzdicke des Innenrings (13, 32) 1,06 beträgt und/oder dass

f. bei dem Spannungswellengetriebe (9) das Verhältnis aus der Deflektion und dem Profilwinkel der Zähne des Innenrings (13, 32) im Bereich von 0,06 bis 0,15 liegt oder im Bereich von 0,08 bis 0,12 liegt, oder dass bei dem Spannungswellengetriebe (9) das Verhältnis aus der Deflektion und dem Profilwinkel der Zähne des Innenrings (13, 32) 0,103 beträgt, und/oder dass

g. bei dem Spannungswellengetriebe (9) das Verhältnis aus der Deflektion und der Zahndicke der Zähne des Innenrings (13, 32) im Bereich von 1,1 bis 1,9 liegt oder im Bereich von 1,4 bis 1,6 liegt oder dass bei dem Spannungswellengetriebe (9) das Verhältnis aus der Deflektion und der Zahndicke der Zähne des Innenrings (13, 32) 1,50 beträgt, und/oder dass

h. der evolventische Anteil der Verzahnungslänge des Innenrings (13, 32) im Bereich von 14% bis 34% liegt oder im Bereich von 19% bis 39% liegt oder 24% beträgt, und/oder dass der evolventische Anteil der Verzahnungslänge des Außenrings (11,31) im Bereich von 16% bis 41% liegt oder im Bereich von 21% bis 36% oder im Bereich von 26% bis 31% liegt oder 29% beträgt.

7. Spannungswellengetriebe (9) nach einem der Ansprüche 1 bis 6, **dadurch gekennzeichnet, dass**

a. die Außenverzahnung (14) des flexiblen Innenrings (13, 32) statt zwischen 154 und 166 Zähnen, eine Zähnezahl im Bereich von 308 bis 332 Zähnen, insbesondere von genau 320 Zähnen aufweist und dass die Innenverzahnung (12) des Außenrings (11, 31) genau vier Zähne mehr aufweist, als der flexible Innenring (13, 32), oder dass

b. die Außenverzahnung (14) des flexiblen Innenrings (13, 32) statt zwischen 154 und 166 Zähnen, eine Zähnezahl im Bereich von 308 bis 332 Zähnen, insbesondere von genau 320 Zähnen aufweist und dass die Innenverzahnung (12) des Außenrings (11, 31) genau vier Zähne mehr aufweist, als der flexible Innenring (13, 32), wobei die Außenverzahnung (14) und die Innenverzahnung (12) jeweils einen Modulwert aufweisen, der der Hälfte der in Anspruch 3 genannten Modulwerte entspricht.

8. Spannungswellengetriebe (9) nach einem der Ansprüche 1 bis 7, **dadurch gekennzeichnet, dass**

a. der Innenring (13, 32) statt an zwei Stellen an drei Stellen in den Außenring (11, 31) eingreift und dass die Außenverzahnung (14) des flexiblen Innenrings (13, 32) statt zwischen 154 und 166 Zähnen, eine Zähnezahl im Bereich von 231 bis 249 Zähnen, insbesondere von genau 240 Zähnen aufweist und dass die Innenverzahnung (12) des Außenrings (11, 31) genau drei Zähne mehr aufweist, als die Außenverzahnung des flexiblen Innenrings (13, 32), oder dass

b. der Innenring (13, 32) statt an zwei Stellen an drei Stellen in den Außenring (11, 31) eingreift und dass die Außenverzahnung (14) des flexiblen Innenrings (13, 32) statt zwischen 154 und 166 Zähnen, eine Zähnezahl im Bereich von 231 bis 249 Zähnen, insbesondere von genau 240 Zähnen aufweist und dass die Innenverzahnung (12) des Außenrings (11, 31) genau drei Zähne mehr aufweist, als die Außenverzahnung des flexiblen Innenrings (13, 32), wobei die Außenverzahnung (14) und die Innenverzahnung (12) jeweils einen Modulwert aufweisen, der 2/3 der in Anspruch 2 genannten Modulwerte entspricht, oder dass

c. der Innenring (13, 32) statt an zwei Stellen an vier Stellen in den Außenring (11, 31) eingreift und dass die Innenverzahnung (12) des Außenrings (11, 31) statt zwei genau vier Zähne mehr aufweist, als die Außenverzahnung (14) des flexiblen Innenrings (13, 32).

9. Aktuator mit einem Überlagerungsgetriebe, das als Spannungswellengetriebe (9) nach einem der Ansprüche 1 bis 8 ausgebildet ist, und mit einem Motor, der eine Welle des Spannungswellengetriebes antreibt.

10. Aktuator nach Anspruch 9, **dadurch gekennzeichnet, dass**

a. der Aktuator als Überlagerungssteller (3) für eine Fahrzeuglenkung (1) ausgebildet ist, der dazu ausgebildet und bestimmt ist, den mit einer Lenkhandhabe (2) ausgeübten Lenkbewegungen zusätzliche Lenkbewegungen zu überlagern, und/oder dass
b. mehr als zwei Spulen des Motors auf eine gemeinsame Motorphase geschaltet sind und/oder dass
c. wenigstens eine Spule des Motors mit wenigstens zwei zueinander parallel geschalteten Drähten bewickelt ist, und/oder dass
d. auf wenigstens einem Statorzahn, insbesondere auf allen Statorzähnen jeweils, genau 17 Windungen vorhanden sind oder dass auf wenigstens einem Statorzahn, insbesondere auf allen Statorzähnen jeweils, mehr als 17 Windungen vorhanden sind, und/oder dass
e. bei dem Motor die Spulenquerschnittsfläche pro Spulenzahn größer als 1,4 mm$^2$ ist, und/oder dass
f. der Rotor des Motors mehr als 4 Polpaare aufweist und/oder dass
g. die Länge der Magnete 20 mm beträgt oder dass die Länge der Magnete mehr als 20 mm beträgt und/oder dass
h. der Außendurchmesser des Rotors im Bereich von 42 mm bis 46 mm liegt oder dass der Außendurchmesser des Rotors 45 mm beträgt und/oder dass
i. der Kopfkreisdurchmesser der Magnete größer als 40 mm ist, und/oder dass
j. der Motor und das Spannungswellengetriebe (9) koaxial zueinander angeordnet sind und/oder dass
k. der Motor und das Spannungswellengetriebe (9) gemeinsam einen Überlagerungssteller (3) bilden und/oder dass
l. der Motor und das Spannungswellengetriebe in einem gemeinsamen Gehäuse (16) angeordnet sind.

11. Fahrwerk, insbesondere aktives Fahrwerk für ein Kraftfahrzeug, das ein Spannungswellengetriebe (9) nach einem der Ansprüche 1 bis 8 und/oder einen Aktuator nach Anspruch 9 oder 10 aufweist.

12. Fahrzeuglenkung (1), die ein Spannungswellengetriebe (9) nach einem der Ansprüche 1 bis 8 und/oder einen Aktuator nach Anspruch 9 oder 10 aufweist, wobei der Aktuator als Überlagerungssteller (3) eine mit der Lenkhandhabe (2) mechanisch verbundene Eingangswelle (7) und eine von dem Motor angetriebene, mit einem Wellengenerator (18, 33) des Spannungswellengetriebes (9) mechanisch verbundene, koaxial zur Eingangswelle (7) angeordnete Antriebswelle (21) aufweist.

13. Kraftfahrzeug, das ein Spannungswellengetriebe (9) nach einem der Ansprüche 1 bis 8 und/oder einen Aktuator nach Anspruch 9 oder 10 und/oder ein Fahrwerk nach Anspruch 11 und/oder eine Fahrzeuglenkung (1) nach Anspruch 12 aufweist.

14. Motorisiertes Gelenk zum Verbinden von zwei relativ zueinander beweglichen Trägern eines programmierbaren Bewegungsautomaten, das ein Spannungswellengetriebe (9) nach einem der Ansprüche 1 bis 8 und/oder einen Aktuator nach Anspruch 9 oder 10 aufweist.

15. Programmierbarer Bewegungsautomat, der ein Spannungswellengetriebe (9) nach einem der Ansprüche 1 bis 8 und/oder einen Aktuator nach Anspruch 9 oder 10 aufweist und/oder der ein motorisiertes Gelenk nach Anspruch 14 aufweist.

**Claims**

1. Strain wave gear (9), having an outer ring (11,31) with an inner toothing (12), with which a flexible inner ring (13,32) with an outer toothing (14) engages at two opposing points, **characterized in that** the ratio of the pitch diameter of the outer ring (11,31) to the rim thickness of the outer ring (11,31) lies in the region of 15 to 20, especially in the region of 16 to 18, especially at 17.587, and **in that**

a. the teeth of the toothing of the inner ring (13,32) have a profile angle in the region of 8 degrees to 15 degrees or in the region of 11 degrees to 12 degrees or one of 11.615 degrees, and/or **in that**
b. the teeth of the toothing of the outer ring (11,31) have a profile angle in the region of 8 degrees to 15 degrees or in the region of 11 degrees to 12 degrees or one of 12.474 degrees.

2. Strain wave gear (9) according to Claim 1, **characterized in that**

a. the number of teeth of the outer toothing (14) of the flexible inner ring (13,32) is between 154 and 166 teeth or amounts to precisely 160 teeth and **in that** the inner toothing (12) of the outer ring (11,31) has precisely two more teeth than the outer toothing (14) of the flexible inner ring (13,32), and/or **in that**
b. the outer ring (11,31) has a rim thickness in the region of 3 mm to 8 mm, especially in the region of 4 mm to 6 mm, especially of 5 mm and/or **in that**
c. the outer ring (11,31) contains iron and/or in that the outer ring (11,31) consists of steel.

3. Strain wave gear (9) according to Claim 1 or 2, **characterized in that**

a. the outer toothing (14) and the inner toothing (12) each have a modulus in the region of 0.4 mm to 0.7 mm or in the region of 0.5 mm to 0.6 mm or in the region of 0.55 mm to 0.57 mm or of 0.56875 mm, and/or **in that**
b. the outer toothing (14) of the inner ring (13, 32) has a pitch diameter in the region of 90 mm to 92 mm or in the region of 90.5 mm to 91.5 mm or of 91.0 mm, and/or **in that**
c. the inner toothing (12) of the outer ring (11, 31) has a pitch diameter in the region of 91 mm to 93 mm or in the region of 91.8 mm to 92.3 mm or of 92.1375 mm, and/or **in that**
d. the strain wave gear (9) has a deflection in the region of 1.1 mm to 1.3 mm or in the region of 1.18 mm to 1.22 mm or one of 1.20 mm.

4. Strain wave gear (9) according to one of Claims 1 to 3, **characterized in that** the strain wave gear (9) comprises a wave generator (18,33), which is mounted rotatably in the inner ring (13,32) by means of a bearing (22).

5. Strain wave gear (9) according to Claim 4, **characterized in that**

a. the bearing (22) has a cross section height (35) in the region of 11 mm to 13 mm or in the region of 12.1 mm to 12.4 mm or one of 12.26 mm, and/or **in that**
b. the roller bodies of the bearing (22), especially balls, have a roller body diameter in the region of 8.5 mm to 8.9 mm or in the region of 8.7 mm to 8.8 mm or one of 8.731 mm, and/or **in that**
c. the quantity of the strain wave gear (9) which is computed from (deflection/cross section height (35)) lies in the region of 0.08 to 0.12 or lies in the region of 0.09 to 0.11 or **in that** the strain wave gear (9) obeys the relation: (deflection/cross section height (35)) = 0.0979, and/or **in that**
d. the quantity of the strain wave gear (9) which is computed from (deflection/cross section height (35)) x roller body diameter lies in the region of 0.7 to 1.0 or lies in the region of 0.8 to 0.9 or **in that** the strain wave gear (9) obeys the relation: (deflection/cross section height (35)) x roller body diameter = 0.855.

6. Strain wave gear (9) according to one of Claims 1 to 5, **characterized in that**

a. the ratio of the deflection and the pitch diameter of the inner ring (13,32) in the strain wave gear (9) lies in the region of 0.008 to 0.018 or lies in the region of 0.01 to 0.016 or **in that** the ratio of the deflection and the pitch diameter of the inner ring (13,32) in the strain wave gear (9) amounts to 0.0132, and/or **in that**
b. in the strain wave gear (9) the teeth of the toothing of the inner ring (13,32) have a tooth thickness in the region of 0.7 mm to 0.9 mm or in the region of 0.75 mm to 0.85 mm or one of 0.8 mm, and/or in that in the strain wave gear (9) the teeth of the toothing of the outer ring (11,31) have a tooth thickness in the region of 0.8 mm to 1.1 mm or in the region of 0.86 mm to 0.96 mm or one of 0.916 mm, and/or in that
c. in the strain wave gear (9) the ratio of the deflection to the number of teeth of the inner ring (13, 32) lies in the region of 0.005 to 0.01 or lies in the region of 0.006 to 0.009 or **in that** in the strain wave gear (9) the ratio of the deflection to the number of teeth of the inner ring (13,32) is 0.0075, and/or **in that**
d. the rim thickness of the inner ring (13,32) lies in the region of 0.9 mm to 1.3 mm or lies in the region of 1.1 mm to 1.2 mm or **in that** the rim thickness of the inner ring (13,32) is 1.128 mm, and/or **in that**
e. in the strain wave gear (9) the ratio of the deflection to the rim thickness of the inner ring (13,32) lies in the region of 0.9 to 1.2 or lies in the region of 1.00 to 1.12 or **in that** in the strain wave gear (9) the ratio of the deflection to the rim thickness of the inner ring (13,32) is 1.06 and/or **in that**
f. in the strain wave gear (9) the ratio of the deflection to the profile angle of the teeth of the inner ring (13,32) lies in the region of 0.06 to 0.15 or lies in the region of 0.08 to 0.12, or **in that** in the strain wave gear (9) the ratio of the deflection to the profile angle of the teeth of the inner ring (13,32) is 0.103, and/or **in that**

g. in the strain wave gear (9) the ratio of the deflection to the tooth thickness of the teeth of the inner ring (13,32) lies in the region of 1.1 to 1.9 or lies in the region of 1.4 to 1.6 or **in that** in the strain wave gear (9) the ratio of the deflection to the tooth thickness of the teeth of the inner ring (13,32) is 1.50, and/or **in that**

h. the evolvent portion of the toothing length of the inner ring (13,32) lies in the region of 14% to 34% or lies in the region of 19% to 39% or amounts to 24%, and/or **in that** the evolvent portion of the toothing length of the outer ring (11,31) lies in the region of 16% to 41% or lies in the region of 21% to 36% or lies in the region of 26% to 31% or amounts to 29%.

7. Strain wave gear (9) according to one of Claims 1 to 6, **characterized in that**

a. the outer toothing (14) of the flexible inner ring (13,32) has, instead of between 154 and 166 teeth, a number of teeth in the region of 308 to 332 teeth, in particular it has precisely 320 teeth, and **in that** the inner toothing (12) of the outer ring (11,31) has precisely four more teeth than the flexible inner ring (13,32), or **in that**

b. the outer toothing (14) of the flexible inner ring (13,32) has, instead of between 154 and 166 teeth, a number of teeth in the region of 308 to 332 teeth, in particular it has precisely 320 teeth, and **in that** the inner toothing (12) of the outer ring (11,31) has precisely four more teeth than the flexible inner ring (13,32), wherein the outer toothing (14) and the inner toothing (12) each have a modulus value which corresponds to half the modulus value as mentioned in Claim 3.

8. Strain wave gear (9) according to one of Claims 1 to 7, **characterized in that**

a. the inner ring (13,32) engages with the outer ring (11,31) at three points instead of two points and **in that** the outer toothing (14) of the flexible inner ring (13,32) has, instead of between 154 and 166 teeth, a number of teeth in the region of 231 to 249 teeth, in particular it has precisely 240 teeth, and **in that** the inner toothing (12) of the outer ring (11,31) has precisely three more teeth than the outer toothing (14) of the flexible inner ring (13,32), or **in that**

b. the inner ring (13,32) engages with the outer ring (11,31) at three points instead of two points and **in that** the outer toothing (14) of the flexible inner ring (13,32) has, instead of between 154 and 166 teeth, a number of teeth in the region of 231 to 249 teeth, in particular it has precisely 240 teeth, and **in that** the inner toothing (12) of the outer ring (11,31) has precisely three more teeth than the outer toothing (14) of the flexible inner ring (13,32), wherein the outer toothing (14) and the inner toothing (12) each have a modulus value which corresponds to 2/3 of the modulus values mentioned in Claim 2, or **in that**

c. the inner ring (13,32) engages with the outer ring (11,31) at four points instead of two points and **in that** the inner toothing (12) of the outer ring (11,31) has, instead of two, precisely four more teeth than the outer toothing (14) of the flexible inner ring (13,32).

9. Actuator with a superposition gear, which is designed as a strain wave gear (9) according to one of Claims 1 to 8, and with a motor which drives a shaft of the strain wave gear (9).

10. Actuator according to Claim 9, **characterized in that**

a. the actuator is designed as a superimposition actuator (3) for a vehicle steering (1), which is designed to superimpose additional steering movements on the steering movements executed with a steering handle (2), and/or **in that**

b. more than two coils of the motor are switched to a common motor phase and/or **in that**

c. at least one coil of the motor is wound with at least two wires switched in parallel with each other, and/or **in that**

d. on at least one stator tooth, especially on all stator teeth respectively, there are present exactly 17 windings or **in that** on at least one stator tooth, especially on all stator teeth respectively, there are present more than 17 windings, and/or **in that**

e. the coil cross section area in the motor per each coil tooth is greater than 1.4 mm$^2$, and/or **in that**

f. the rotor of the motor has more than 4 pole pairs and/or **in that**

g. the length of the magnets is 20 mm or **in that** the length of the magnets is more than 20 mm and/or **in that**

h. the outer diameter of the rotor lies in the region of 42 mm to 46 mm or **in that** the outer diameter of the rotor is 45 mm and/or **in that**

i. the tip circle diameter of the magnets is greater than 40 mm, and/or **in that**

j. the motor and the strain wave gear (9) are arranged coaxially to each other and/or **in that**

k. the motor and the strain wave gear (9) together form a superimposition actuator (3) and/or **in that**
l. the motor and the strain wave gear are arranged in a common housing (16).

11. Chassis, especially active chassis for a motor vehicle, comprising a strain wave gear (9) according to one of Claims 1 to 8 and/or an actuator according to Claim 9 or 10.

12. Vehicle steering (1), comprising a strain wave gear (9) according to one of Claims 1 to 8 and/or an actuator according to Claim 9 or 10, wherein the actuator as a superimposition actuator (3) comprises an input shaft (7) mechanically connected to the steering handle (2) and a drive shaft (21), arranged coaxially to the input shaft (7), which is driven by the motor and mechanically connected to a wave generator (18,33) of the strain wave gear (9).

13. Motor vehicle, which comprises a strain wave gear (9) according to one of Claims 1 to 8 and/or an actuator according to Claim 9 or 10 and/or a chassis according to Claim 11 and/or a vehicle steering (1) according to Claim 12.

14. Motorized linkage for the connecting of two carriers of a programmable automated movement device able to move relative to each other, which comprises a strain wave gear (9) according to one of Claims 1 to 8 and/or an actuator according to Claim 9 or 10.

15. Programmable automated movement device, which comprises a strain wave gear (9) according to one of Claims 1 to 8 and/or an actuator according to Claim 9 or 10 and/or a motorized linkage according to Claim 14.

**Revendications**

1. Engrenage à onde de déformation (9), qui présente une couronne extérieure (11, 31) avec une denture intérieure (12), dans laquelle s'engage, au niveau de deux points opposés, une couronne intérieure flexible (13, 32) avec une denture extérieure (14), **caractérisé en ce que** le rapport du diamètre de cercle partiel de la couronne extérieure (11, 31) à l'épaisseur de couronne de la couronne extérieure (11, 31) est de l'ordre de 15 à 20, en particulier de l'ordre de 16 à 18, en particulier est de 17,587 et **en ce que**

   a. les dents de la denture de la couronne intérieure (13, 32) présentent un angle de profil de l'ordre de 8 degrés à 15 degrés ou de l'ordre de 11 degrés à 12 degrés ou de 11,615 degrés, et/ou **en ce que**
   b. les dents de la denture de la couronne extérieure (11, 31) présentent un angle de profil de l'ordre de 8 degrés à 15 degrés ou de l'ordre de 11 degrés à 12 degrés ou de 12,474 degrés.

2. Engrenage à onde de déformation (9) selon la revendication 1, **caractérisé en ce que**

   a. le nombre de dents de la denture extérieure (14) de la couronne intérieure flexible (13, 32) est compris entre 154 et 166 dents ou est de 160 dents exactement et **en ce que** la denture intérieure (12) de la couronne extérieure (11, 31) présente exactement deux dents de plus que la denture extérieure (14) de la couronne intérieure flexible (13, 32), et/ou **en ce que**
   b. la couronne extérieure (11, 31) présente une épaisseur de couronne de l'ordre de 3 mm à 8 mm, en particulier de l'ordre de 4 mm à 6 mm, en particulier de 5 mm, et/ou **en ce que**
   c. la couronne extérieure (11, 31) contient du fer et/ou **en ce que** la couronne extérieure (11, 31) se compose d'acier.

3. Engrenage à onde de déformation (9) selon la revendication 1 ou 2, **caractérisé en ce que**

   a. la denture extérieure (14) et la denture intérieure (12) présentent chacune un module de l'ordre de 0,4 mm à 0,7 mm ou de l'ordre de 0,5 mm à 0,6 mm ou de l'ordre de 0,55 mm à 0,57 mm ou de 0,56875 mm, et/ou **en ce que**
   b. la denture extérieure (14) de la couronne intérieure (13, 32) présente un diamètre de cercle partiel de l'ordre de 90 mm à 92 mm ou de l'ordre de 90,5 mm à 91,5 mm ou de 91,0 mm, et/ou **en ce que**
   c) la denture intérieure (12) de la couronne extérieure (11, 31) présente un diamètre de cercle partiel de l'ordre de 91 mm à 93 mm ou de l'ordre de 91,8 mm à 92,3 mm ou de 92,1375 mm, et/ou **en ce que**
   d. l'engrenage à onde de déformation (9) présente une déflection de l'ordre de 1,1 mm à 1,3 mm ou de l'ordre de 1,18 mm à 1,22 mm ou de 1,20 mm.

4. Engrenage à onde de déformation (9) selon l'une quelconque des revendications 1 à 3, **caractérisé en ce que** l'engrenage à onde de déformation (9) présente un générateur d'onde (18, 33) qui est supporté au moyen d'un palier (22) de manière rotative dans la couronne intérieure (13, 32).

5. Engrenage à onde de déformation (9) selon la revendication 4, **caractérisé en ce que**

a. le palier (22) présente une hauteur de coupe (35) de l'ordre de 11 mm à 13 mm ou de l'ordre de 12,1 mm à 12,4 mm ou de 12,26 mm, et/ou **en ce que**

b. les corps de roulement du palier (22), en particulier des billes, présentent un diamètre de corps de roulement de l'ordre de 8,5 mm à 8,9 mm ou de l'ordre de 8,7 mm à 8,8 mm ou de 8,731 mm, et/ou **en ce que**

c. dans le cas de l'engrenage à onde de déformation (9), la dimension calculée à partir de (déflection/hauteur de coupe (35)) est de l'ordre de 0,08 à 0,12 ou de l'ordre de 0,09 à 0,11 ou **en ce que**, pour l'engrenage à onde de déformation (9), on a : (déflection/hauteur de coupe (35)) = 0,0979, et/ou **en ce que**

d. dans le cas de l'engrenage à onde de déformation (9), la dimension calculée à partir de (déflection/hauteur de coupe (35)) x diamètre des corps de roulement est de l'ordre de 0,7 à 1,0 ou de l'ordre de 0,8 à 0,9 ou **en ce que**, pour l'engrenage à onde de déformation (9), on a : (déflection/hauteur de coupe (35)) x diamètre des corps de roulement = 0,855.

6. Engrenage à onde de déformation (9) selon l'une quelconque des revendications 1 à 5, **caractérisé en ce que**

a. dans le cas de l'engrenage à onde de déformation (9), le rapport de la déflexion et du diamètre de cercle partiel de la couronne intérieure (13, 32) est de l'ordre de 0,008 à 0,018 ou est de l'ordre de 0,01 à 0,016 ou **en ce que** dans le cas de l'engrenage à onde de déformation (9), le rapport de la déflexion et du diamètre du cercle partiel de la couronne intérieure (13, 32) est de 0,0132, et/ou **en ce que**

b. dans le cas de l'engrenage à onde de déformation (9), les dents de la denture de la couronne intérieure (13, 32) présentent une épaisseur de dents de l'ordre de 0,7 mm à 0,9 mm, ou de l'ordre de 0,75 mm à 0,85 mm ou de 0,8 mm, et/ou **en ce que** dans le cas de l'engrenage à onde de déformation (9), les dents de la denture de la couronne extérieure (11, 31) présentent une épaisseur de dents de l'ordre de 0,8 mm à 1,1 mm ou de l'ordre de 0,86 mm à 0,96 mm ou de 0,916 mm, et/ou **en ce que**

c. dans le cas de l'engrenage à onde de déformation (9), le rapport de la déflection et du nombre de dents de la couronne intérieure (13, 32) est de l'ordre de 0,005 à 0,01 ou est de l'ordre de 0,006 à 0,009 ou **en ce que** dans le cas de l'engrenage à onde de déformation (9), le rapport de la déflection et du nombre de dents de la couronne intérieure (13, 32) est de 0,0075, et/ou **en ce que**

d. l'épaisseur de couronne de la couronne intérieure (13, 32) est de l'ordre de 0,9 mm à 1,3 mm ou de l'ordre de 1,1 mm à 1,2 mm ou **en ce que** l'épaisseur de couronne de la couronne intérieure (13, 32) est de 1,128 mm, et/ou **en ce que**

e. dans le cas de l'engrenage à onde de déformation (9), le rapport de la déflection et de l'épaisseur de couronne de la couronne intérieure (13, 32) est de l'ordre de 0,9 à 1,2 ou de l'ordre de 1,00 à 1,12 ou **en ce que** dans le cas de l'engrenage à onde de déformation (9), le rapport de la déflection et de l'épaisseur de couronne de la couronne intérieure (13, 32) est de 1,06 et/ou **en ce que**

f. dans le cas de l'engrenage à onde de déformation (9), le rapport de la déflection et de l'angle de profil des dents de la couronne intérieure (13, 32) est de l'ordre de 0,06 à 0,15 ou de l'ordre de 0,08 à 0,12, ou **en ce que** dans le cas de l'engrenage à onde de déformation (9), le rapport de la déflection et de l'angle de profil des dents de la couronne intérieure (13, 32) est de 0,103, et/ou **en ce que**

g. dans le cas de l'engrenage à onde de déformation (9), le rapport de la déflection et de l'épaisseur de dents des dents de la couronne intérieure (13, 32) est de l'ordre de 1,1 à 1,9 ou de l'ordre de 1,4 à 1,6 ou **en ce que** dans le cas de l'engrenage à onde de déformation (9), le rapport de la déflection et de l'épaisseur de dents des dents de la couronne intérieure (13, 32) est de 1,50, et/ou en ce que

h. la proportion développante de la longueur de denture de la couronne intérieure (13, 32) est de l'ordre de 14 % à 34 % ou de l'ordre de 19 % à 39 % ou est de 24 %, et/ou **en ce que** la proportion développante de la longueur de denture de la couronne extérieure (11, 31) est de l'ordre de 16 % à 41 % ou de l'ordre de 21 % à 36 % ou de l'ordre de 26 % à 31 % ou est de 29 %.

7. Engrenage à onde de déformation (9) selon l'une quelconque des revendications 1 à 6, **caractérisé en ce que**

a. la denture extérieure (14) de la couronne intérieure flexible (13, 32) présente, au lieu de 154 à 166 dents, un nombre de dents de l'ordre de 308 à 332 dents, en particulier d'exactement 320 dents et **en ce que** la denture intérieure (12) de la couronne extérieure (11, 31) présente exactement quatre dents de plus que la couronne intérieure flexible (13, 32), ou **en ce que**

b. la denture extérieure (14) de la couronne intérieure flexible (13, 32), au lieu de 154 à 166 dents, présente un nombre de dents de l'ordre de 308 à 332 dents, en particulier exactement 320 dents et **en ce que** la denture intérieure (12) de la couronne extérieure (11, 31) présente exactement quatre dents de plus que la couronne intérieure flexible (13, 32), la denture extérieure (14) et la denture intérieure (12) présentant chacune une valeur de module qui correspond à la moitié des valeurs de module citées à la revendication 3.

8. Engrenage à onde de déformation (9) selon l'une quelconque des revendications 1 à 7, **caractérisé en ce que**

a. la couronne intérieure (13, 32), au lieu de s'engager en deux points, s'engage en trois points dans la couronne extérieure (11, 31) et **en ce que** la denture extérieure (14) de la couronne intérieure flexible (13, 32), au lieu de présenter entre 154 et 166 dents, présente un nombre de dents de l'ordre de 231 à 249 dents, en particulier d'exactement 240 dents, et **en ce que** la denture intérieure (12) de la couronne extérieure (11, 31) présente exactement trois dents de plus que la denture extérieure de la couronne intérieure flexible (13, 32), ou **en ce que**
b. la couronne intérieure (13, 32), au lieu de s'engager en deux points, s'engage en trois points dans la couronne extérieure (11, 31) et **en ce que** la denture extérieure (14) de la couronne intérieure flexible (13, 32), au lieu de présenter entre 154 et 166 dents, présente un nombre de dents de l'ordre de 231 à 249 dents, en particulier d'exactement 240 dents, et **en ce que** la denture intérieure (12) de la couronne extérieure (11, 31) présente exactement trois dents de plus que la denture extérieure de la couronne intérieure flexible (13, 32), la denture extérieure (14) et la denture intérieure (12) présentant chacune une valeur de module qui correspond à deux tiers des valeurs de module citées dans la revendication 2, ou **en ce que**
c. la couronne intérieure (13, 32), au lieu de s'engager en deux points, s'engage en 4 points dans la couronne extérieure (11, 31) et **en ce que** la denture intérieure (12) de la couronne extérieure (11, 31), au lieu de présenter deux dents de plus, présente exactement quatre dents de plus que la couronne extérieure (14) de la couronne intérieure flexible (13, 32).

9. Actionneur comprenant un réducteur à superposition qui est réalisé sous forme d'engrenage à onde de déformation (9) selon l'une quelconque des revendications 1 à 8, et comprenant un moteur qui entraîne un arbre de l'engrenage à onde de déformation.

10. Actionneur selon la revendication 9, **caractérisé en ce que**

a. l'actionneur est réalisé sous forme d'actionneur de superposition (3) pour une direction de véhicule (1), qui est réalisé et prévu pour superposer des mouvements de direction supplémentaires à des mouvements de direction exercés par un volant de direction (2), et/ou **en ce que**
b. plus de deux bobines du moteur sont commutées sur une phase moteur commune et/ou **en ce que**
c. au moins une bobine du moteur est enroulée avec au moins deux fils branchés en parallèle, et/ou en ce que
d. sur au moins une dent statorique, en particulier sur toutes les dents statoriques, à chaque fois exactement 17 enroulements sont prévus ou **en ce que** sur au moins une dent statorique, en particulier sur toutes les dents statoriques, à chaque fois plus de 17 enroulements sont prévus et/ou **en ce que**
e. dans le cas du moteur, la surface en section transversale des bobines par dent de bobine est supérieure à 1,4 mm$^2$ et/ou **en ce que**
f. le rotor du moteur présente plus de 4 paires de pôles et/ou **en ce que**
g. la longueur des aimants est de 20 mm ou **en ce que** la longueur des aimants est supérieure à 20 mm et/ou **en ce que**
h. le diamètre extérieur du rotor est compris dans une plage de 42 mm à 46 mm ou **en ce que** le diamètre extérieur du rotor est de 45 mm et/ou en ce que
i. le diamètre du cercle de tête des aimants est supérieur à 40 mm, et/ou **en ce que**
j. le moteur et l'engrenage à onde de déformation (9) sont disposés coaxialement l'un par rapport à l'autre et/ou **en ce que**
k. le moteur et l'engrenage à onde de déformation (9) forment ensemble un actionneur de superposition (3) et/ou **en ce que**
l. le moteur et l'engrenage à onde de déformation sont disposés dans un boîtier commun (16).

11. Châssis de roulement, en particulier châssis de roulement actif pour un véhicule automobile, qui présente un engrenage à onde de déformation (9) selon l'une quelconque des revendications 1 à 8 et/ou un actionneur selon la revendication 9 ou 10.

12. Direction de véhicule (1) qui présente un engrenage à onde de déformation (9) selon l'une quelconque des revendications 1 à 8 et/ou un actionneur selon la revendication 9 ou 10, l'actionneur, en tant qu'actionneur de superposition (3), présentant un arbre d'entrée (7) connecté mécaniquement au volant de direction (2) et un arbre d'entraînement (21) entraîné par le moteur, connecté mécaniquement à un générateur d'onde (18, 33) de l'engrenage à onde de déformation (9), disposé coaxialement par rapport à l'arbre d'entrée (7).

13. Véhicule automobile qui présente un engrenage à onde de déformation (9) selon l'une quelconque des revendications 1 à 8 et/ou un actionneur selon la revendication 9 ou 10 et/ou un châssis de roulement selon la revendication 11 et/ou une direction de véhicule (1) selon la revendication 12.

14. Articulation motorisée pour relier deux supports mobiles l'un par rapport à l'autre d'un automate à mouvement programmable qui présente un engrenage à onde de déformation (9) selon l'une quelconque des revendications 1 à 8 et/ou un actionneur selon la revendication 9 ou 10.

15. Automate à mouvement programmable qui présente un engrenage à onde de déformation (9) selon l'une quelconque des revendications 1 à 8 et/ou un actionneur selon la revendication 9 ou 10 et/ou qui présente une articulation motorisée selon la revendication 14.

**Fig. 1**

Fig. 2

Fig. 3

**Fig. 4**

35

Fig. 5

**Fig. 6**

Fig. 7

**EP 3 271 614 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007051418 A1
- DE 102007000945 A1
- DE 102011109170 A1
- DE 102011053323 A1
- DE 102010037226 B4